# EUROPÄISCHE PATENTSCHRIFT

(11) **EP 2 758 187 B1**
(45) Veröffentlichungstag und Bekanntmachung des Hinweises auf die Patenterteilung: **23.03.2016**
(21) Anmeldenummer: 12735139.3
(22) Anmeldetag: 11.07.2012
(51) Int. Cl.: B07C 5/34, G01N 21/90

(54) **VERFAHREN UND VORRICHTUNG ZUR INSPEKTION VON BEHÄLTERN UND VORFORMLINGEN**
PROCESS AND DEVICE FOR INSPECTION OF CONTAINERS OR PREFORMS
PROCÉDÉ ET DISPOSITIF D'INSPECTION DES RÉCIPIENTS OU PRÉFORME

(30) Priorität: 20.09.2011 DE 102011083037
(43) Veröffentlichungstag der Anmeldung: 30.07.2014
(73) Patentinhaber: Krones AG, 93073 Neutraubling (DE)
(72) Erfinder: LINDNER, Peter, 84085 Langquaid (DE)
(74) Vertreter: Grünecker Patent- und Rechtsanwälte PartG mbB
(86) Internationale Anmeldenummer: PCT/EP2012/063565
(87) Internationale Veröffentlichungsnummer: WO 2013/041260

(56) Entgegenhaltungen:
- WO-A1-2007/045235
- WO-A1-2010/012631
- US-A- 3 218 463
- US-A- 5 558 836

## Beschreibung

Die Erfindung betrifft ein Verfahren und eine Vorrichtung zur Inspektion von Behältern und/oder Vorformlingen. Verfahren und Vorrichtung gemäß Oberbegriff des Anspruchs 1 bzw. 13 sind aus WO2007/045235 A1 bekannt.

Behälter, wie beispielsweise Getränkeflaschen, werden üblicherweise vor dem Abfüllen der Produkte auf das Vorhandensein von Beschädigungen und/oder Fremdkörpern untersucht. Beispielsweise ist es aus der EP 0663069 B1 bekannt, die Seitenwand von Leerflaschen im Hellfeld mittels einer Kamera und eines Spiegelkabinetts aus mehreren umfänglichen Richtungen abzubilden. Aufgrund der Lichtbrechung an den gewölbten Grenzflächen zwischen der Flaschenwand und Luft müssen zur Belichtung allerdings vergleichsweise ausgedehnte Flächenstrahler verwendet werden, die einen unerwünscht hohen Platzbedarf verursachen. Außerdem sind Flächenstrahler und Kameras für die Seitenwandinspektion quer zur Transportrichtung, einander gegenüberliegend, anzuordnen. Um die Behälter vollumfänglich abzubilden, müssen dann wenigstens zwei derartige Inspektionseinheiten hintereinander vorgesehen werden. Zugunsten einer möglichst kompakten Bauweise der Inspektionseinheiten werden die Behälter zwischen diesen ferner um ihre Hauptachse gedreht. Dies verursacht einen zusätzlichen Aufwand.

Bei anderen Inspektionseinheiten, wie beispielsweise zur Bodeninspektion von Leerflaschen, tritt das Problem auf, dass eine gerichtete Hellfeldbestrahlung der jeweiligen Wandbereiche bei unregelmäßiger Formgebung behindert wird oder teilweise nicht möglich ist, wie beispielsweise hinter Griffmulden. Werden zu inspizierende Wandbereiche abgeschattet, ist eine zuverlässige Leerflascheninspektion nicht oder nur eingeschränkt möglich.

Es besteht daher der Bedarf für alternative Inspektionsverfahren und Inspektionsvorrichtungen, bei denen die oben genannten Probleme nicht oder nur in abgemilderter Form auftreten.

Die gestellte Aufgabe wird mit einem Verfahren zur Inspektion von Behältern und/oder Vorformlingen gemäß Anspruch 1 gelöst. Demnach sind folgende Schritte vorgesehen:
a) Bereitstellen eines Streumittels im Inneren der Behälter oder Vorformlinge;
b) Bestrahlen des Streumittels derart, dass das Streumittel ein Hellfeld hinter einem abzubildenden Wandbereich des Behälters oder Vorformlings ausbildet; und
c) Abbilden des Wandbereichs, wobei das Streumittel im Wesentlichen gasförmig vorliegt.

Das bestrahlte Streumittel stellt somit eine virtuelle, diffuse Lichtquelle bereit. Es ist dadurch möglich, Strahlungsquellen zum Bestrahlen des Streumittels außerhalb des Bildbereichs der Kamera anzuordnen. Es ist beispielsweise möglich, die Hauptstrahlrichtung der Strahlungsquelle im Wesentlichen orthogonal zur optischen Achse des abbildenden Objektivs auszurichten. Dadurch lassen sich vergleichsweise kompakte Inspektionseinheiten realisieren.

Vorzugsweise liegt das Streumittel im Schritt c) als Dampf, Nebel und/oder Rauch vor. Dadurch lässt sich das Streumittel vergleichsweise einfach und gleichmäßig im Inneren des Behälters oder Vorformlings verteilen. Dies ermöglicht eine vergleichsweise homogene virtuelle Lichtquelle zum Erzeugen des Hellfelds. Gasförmige Fluide lassen sich zudem mit einer hohen Geschwindigkeit in den Behälter einbringen. Außerdem lassen sich mit Fluiden die hygienischen Anforderungen in Abfüllanlagen einhalten.

Vorzugsweise ist das Streumittel schwerer als Luft. Dies vereinfacht die Handhabung des mit dem Streumittel beaufschlagten Behälters oder Vorformlings. Das Streumittel könnte dann für einen nachfolgenden Behandlungsschritt in dem Behälter verbleiben, beispielsweise für eine aseptische Kaltabfüllung. Bei Verwendung leichterer Streumittel kann die Behältermündung für die Inspektion je nach Bedarf auch temporär verschlossen werden.

Bei einer besonders günstigen Ausgestaltung wird das Streumittel gekühlt in flüssiger Phase zugeführt, insbesondere in Form von flüssigem Stickstoff. Es lässt sich dann insbesondere im Zusammenwirken mit natürlicher oder künstlich erzeugter Luftfeuchte auf einfache Weise ein streuender Nebel erzeugen. Stickstoff hat hierbei den Vorteil, dass er beispielsweise für eine anschließende aseptische Kaltabfüllung in den Behältern verbleiben kann. Die Dosierung des Stickstoffs kann beispielsweise innerhalb von 10 Millisekunden, insbesondere von 5 Millisekunden erfolgen.

Vorzugsweise umfasst das Streumittel einen Druckentlastungsnebel, insbesondere einen Nebel infolge einer Druckentlastung bei der Herstellung des Behälters. Geeignete Druckentlastungsnebel entstehen beim Zusammenwirken von Sauerstoff und Luftfeuchte bei der schlagartigen Entlastung während des Entformens geblasener Kunststoffbehälter, beispielsweise von PET-Flaschen. Es ist daher möglich, bereits bei der Herstellung der Behälter als Abfallprodukt anfallende Entlastungsnebel als erfindungsgemäße Streumittel zu verwenden. Bei Bedarf können derartige, herstellungsbedingte Entlastungsnebel im Bereich der Inspektionseinheit durch andere und/oder gleichartige Streumittel ergänzt werden.

Vorzugsweise ist das Streumittel im Schritt c) mit dem Wandbereich in Kontakt. Dadurch können die zu inspizierenden Wandbereiche ohne Abschattungen und gleichmäßig ausgeleuchtet werden. Es können somit alle zu inspizierenden Wandbereiche diffus mit dem erfindungsgemäßen Hellfeld hinterleuchtet werden. Demgegenüber entstehen bei einer gerichteten Hellfeldbestrahlung gegebenenfalls durch Lichtbrechung verursachte Dunkelzonen, in denen eine Leerflascheninspektion nicht oder nur mit unzureichender Zuverlässigkeit möglich ist. Das Streumittel lässt sich beispielsweise durch Verwirbelungen in geeigneter Weise gleichmäßig innerhalb des zu inspizierenden Behälters oder Vorformlings verteilen.

Vorzugsweise hat das Streumittel eine sterilisierende Wirkung. Dadurch wird insbesondere ein anschließendes Abfüllen bei niedrigen Temperaturen erleichtert. Gegebenenfalls kann dadurch ein zusätzlicher Behandlungsschritt zur Entkeimung eingespart werden.

Bei einer besonders günstigen Ausgestaltung des erfindungsgemäßen Verfahrens ist der abzubildende Wandbereich der Boden des Behälters oder Vorformlings, und das Streumittel wird durch die Seitenwand und/oder die Mündung des Behälters oder Vorformlings bestrahlt. Mit Hilfe des Streumittels lassen sich insbesondere durch die Seitenwand, bei Bedarf aber auch durch die enge Behältermündung, sämtliche Bereiche des Behälterbodens ausleuchten. Insbesondere können Abschattungen durch Einbuchtungen, wie beispielsweise Griffmulden und dergleichen, vermieden werden.

Bei einer weiteren günstigen Ausgestaltung des erfindungsgemäßen Verfahrens ist der abzubildende Wandbereich die Seitenwand des Behälters oder Vorformlings, und das Streumittel wird von oben und/oder unten, insbesondere durch die Mündung und/oder den Boden des Behälters oder Vorformlings, bestrahlt. Es lässt sich somit eine im Wesentlichen zur Behälterhauptachse parallel ausgerichtete Bestrahlung realisieren. Dies ermöglicht eine rotationssymmetrische Ausleuchtung des Behälters oder Vorformlings von innen. Es lässt sich somit ein Hellfeld erzeugen, das im Wesentlichen aus allen umfänglichen Betrachtungsrichtungen gleichzeitig betrachtet und abgebildet werden kann. Anders gesagt, können Strahlungsquellen vollumfänglich außerhalb des Bildbereichs der Kameras angeordnet werden, so dass eine vollumfängliche Seitenwandinspektion an einer einzigen Inspektionsposition ermöglicht wird. Insbesondere können einander gegenüberliegende seitliche Wandbereiche mittels geeignet angeordneter Kameras und der erfindungsgemäßen Bestrahlung nahezu gleichzeitig abgebildet werden, d. h. in unmittelbar aufeinander folgenden Kamerabildern. Hierbei lässt sich durch ein beidseitiges Bestrahlen des Streumittels durch die Behältermündung und den Behälterboden ein besonders gleichmäßiges Hellfeld erzeugen.

Vorzugsweise ist die räumliche Verteilung des Streumittels im Bereich des abzubildenden Wandabschnitts im Wesentlichen symmetrisch zur Hauptachse des Behälters. Dadurch lässt sich ein Hellfeld bereitstellen, dass unabhängig von der Drehlage des Behälters und aus allen seitlichen Kamerapositionen betrachtet werden kann. Somit lässt sich insbesondere die Hellfeldbeleuchtung für die Seitenwandinspektion leerer Flaschen oder Vorformlinge vereinfachen. Das Streumittel kann sich selbstständig im Behälter auf geeignete Weise ausbreiten oder auch verwirbelt werden, um eine möglichst homogene Verteilung zu erhalten.

Bei einer bevorzugten Ausgestaltung des erfindungsgemäßen Verfahrens werden die Behälter oder Vorformlinge in den Schritten a) bis c) entlang einer Förderstrecke bewegt. Dadurch lässt sich das erfindungsgemäße Verfahren in vorteilhafter Weise in einem kontinuierlich zu inspizierenden Produktstrom verwenden.

Vorzugsweise wird das Streumittel nacheinander aus wenigstens zwei unterschiedlichen Hauptstrahlrichtungen bestrahlt, um entlang der Förderstrecke wenigstens zwei Hellfelder für die Inspektion unterschiedlicher Wandbereiche bereitzustellen. Anders gesagt, kann das Streumittel in den Behältern oder Vorformlingen für unterschiedliche Inspektionen verwendet werden. Das Streumittel kann somit in dem zu inspizierenden Behälter oder Vorformling verbleiben, so dass lediglich die Richtung, aus der das Streumittel bestrahlt wird, geändert werden muss. Dadurch lassen sich die Anzahl und/oder Abmessungen der für die Erzeugung der unterschiedlichen Hellfelder benötigten Lichtquellen reduzieren.

Die gestellte Aufgabe wird ferner gelöst mit einer Vorrichtung zur Inspektion von Behältern oder Vorformlingen gemäß Anspruch 13. Demnach umfasst diese wenigstens eine Kamera zum Abbilden eines zu inspizierenden Wandbereichs der Behälter oder Vorformlinge, eine Einrichtung zum Bereitstellen und/oder Verteilen eines Streumittels im Inneren der Behälter oder Vorformlinge, und wenigstens eine Strahlungsquelle zum Beleuchten des Streumittels derart, dass das beleuchtete Streumittel ein Hellfeld beim Abbilden des Wandbereichs ausbildet. Die Vorrichtung ist ferner so ausgebildet, dass das Streumittel beim Abbilden im Wesentlichen gasförmig vorliegt. Das Streumittel wird vorzugsweise mit einer Dosiereinrichtung eingebracht, beispielsweise als gekühlte, flüssige Phase. Dadurch lässt sich insbesondere im Zusammenwirken mit vorhandener Luftfeuchte auf einfache Weise ein geeignetes Streumittel bereitstellen. Das Streumittel ließe sich in flüssiger Phase innerhalb weniger Millisekunden in den Behälter oder Vorformling einbringen, worauf sich im Inneren des Behälters oder Vorformlings ein geeigneter Streunebel ausbildet. Das Streumittel kann aber auch außerhalb der erfindungsgemäßen Vorrichtung erzeugt werden, beispielsweise durch Druckentlastung bei der Entformung geblasener Behälter.

Vorzugsweise unterscheiden sich die Hauptstrahlrichtung der Strahlungsquelle und die Blickrichtung der Kamera bezüglich der Hauptachse des Behälters oder Vorformlings um 45° bis 135° voneinander. Dies erhöht die Gestaltungsfreiheit und reduziert den Platzbedarf unter der Voraussetzung, dass weder die Strahlungsquelle noch die Kamera mit der Transportstrecke kollidieren dürfen. Außerdem ermöglicht dies eine vollumfängliche Abbildungen der zu inspizierenden Behälter oder Vorformlinge im Bereich einer Strahlungsquelle.

Bei einer besonders günstigen Ausführungsform sind im Bereich der Strahlungsquelle wenigstens zwei Kameras einander gegenüber liegend zu beiden Seiten einer Transportstrecke für die Behälter oder Vorformlinge vorgesehen, so dass die Kameras die bestrahlten Behälter oder Vorformlinge an einer gemeinsamen Inspektionsposition bezüglich der Transportstrecke und/oder gleichzeitig abbilden können. Dies ermöglicht die Inspektion einander gegenüberliegende Seitenwandbereiche der Behälter oder Vorformlinge ohne Ändern ihrer Drehlage bezüglich der Transportstrecke. Dadurch lassen sich besonders kompakte Inspektionseinheiten realisieren. Insbesondere wird ein Ändern der Drehlage zwischen zwei getrennten Inspektionseinheiten zur Seitenwandinspektion entbehrlich.

Eine bevorzugte Ausführungsform der Erfindung ist in der Zeichnung dargestellt. Es zeigen:
- Figur 1: eine schematische Seitenansicht einer bevorzugten Ausführungsform der erfindungsgemäßen Inspektionsvorrichtung;
- Figur 2: eine schematische Draufsicht auf die Inspektionsvorrichtung der Figur 1; und
- Figur 3: eine schematische Vorderansicht einer erfindungsgemäße Anordnung einer Strahlungsquelle und einer Kamera.

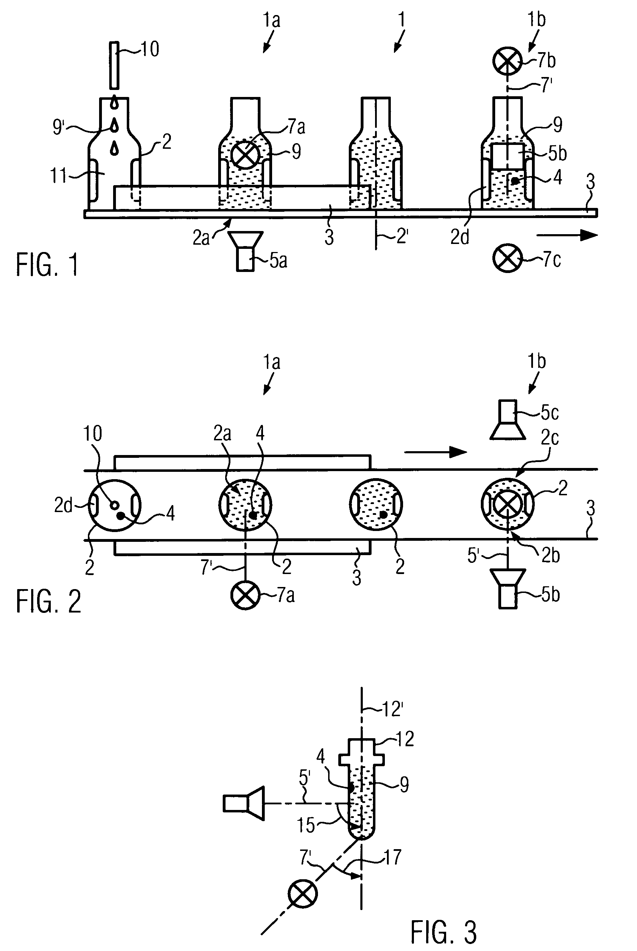

Wie die Figur 1 erkennen lässt, dient die erfindungsgemäße Vorrichtung 1 vorzugsweise zur Leerinspektion von Behältern 2, die beispielsweise aus Kunststoff oder Glas bestehen können, insbesondere zum Erkennen von Fremdkörpern 4, Beschädigungen und dergleichen. Die Inspektionsvorrichtung 1 umfasst beispielsweise eine erste Inspektionseinheit 1a zur Bodeninspektion der Behälter 2 und eine zweite Inspektionseinheit 1b zur Seitenwandinspektion der Behälter 2. Die Inspektionsvorrichtung 1 befindet sich im Bereich eines Transporteurs 3, der beispielsweise als lineare Transportstrecke oder karussellförmig ausgebildet sein kann.

Gemäß Figur 1 und 2 sind ferner Kameras 5a bis 5c vorgesehen sowie Strahlungsquellen 7a bis 7c, die beispielsweise gepulste Leuchtdioden sein können oder Blitzlampen und dergleichen. In den Behältern 2 wird ein Streumittel 9 bereitgestellt, beispielsweise in Form eines Nebels. Das Streumittel 9 wird jeweils von den Strahlungsquellen 7a bis 7c beleuchtet, um mit dem Streumittel 9 ein diffuses Hellfeld zu erzeugen, dass den jeweils von den Kameras 5a bis 5c abzubildenden Wandbereich 2a bis 2c der Behälter 2 im Durchlicht beleuchtet.

Das Streumittel 9 ist im Inneren der Behälter 2 derart verteilt, dass die zu inspizierenden Wandbereiche 2a bis 2c der Behälter 2 mit dem Streumittel 9 in Kontakt sind. Wie die Figur 1 andeutet, kann das Streumittel 9 beispielsweise als gekühlte flüssige Phase 9' mittels einer Dosiereinrichtung 10 im Bereich der Inspektionsvorrichtung 1 in die Behälter 2 eingebracht werden. Die flüssige Phase 9' kann beispielsweise flüssiger Stickstoff sein. Durch Verdampfen der flüssigen Phase 9' bei Raumtemperatur und die einhergehende Abkühlung der Luft 11 im Inneren der Behälter 2 bildet sich mit der vorhandenen Luftfeuchte im Inneren der Behälter 2 ein Nebel aus, der als Streumittel 9 dient.

Das Streumittel 9 ist vorzugsweise ein Fluid und schwerer als die Luft 11, wodurch die Handhabung des mit dem Streumittel 9 beaufschlagten Behälters 2 vereinfacht wird. Beispielsweise könnte das Streumittel 9 dann für einen nachfolgenden Behandlungsschritt auch in dem Behälter 2 verbleiben. Das Streumittel 9 kann auch durch andere gekühlte flüssige Phasen erzeugt werden, wie beispielsweise Kohlendioxid, und/oder kann insbesondere auch in Form eines Druckentlastungsnebels bereitgestellt werden, wie er beispielsweise beim Entformen geblasener Kunststoffbehälter entsteht. Zur besseren Handhabung nicht absinkender Fluide könnten die Behälter 2 temporär verschlossen werden.

Es wäre ebenso denkbar, einen in den Behältern 2 bereits vorhandenen Druckentlastungsnebel im Bereich der Inspektionsvorrichtung 1, beispielsweise mittels der flüssigen Phase 9' oder einem anderen Fluid, zu ergänzen, um das Streumittel 9 auszubilden. Geeignete Fluide zum Ausbilden des Streumittels 9 sind Gase, Dämpfe, Nebel und/oder Rauch. Entscheidend ist, dass das Streumittel 9 eine für die Hellfeldbestrahlung ausreichende Strahlungsdiffusion ermöglicht. Besonders geeignet hierfür ist Strahlungsbrechung an kleinen Tröpfchen, wie beispielsweise in Nebeln und dergleichen. Je nach hygienischen Anforderungen wären auch Streumittel 9 in Form aufblasbarer Streuballons im Inneren des Behälters 2 denkbar.

Wie anhand der ersten Inspektionseinheit 1a zur Bodeninspektion zu erkennen ist, ermöglicht das Streumittel 9 die Beleuchtung des zu inspizierenden Wandabschnitts 2a auch hinter Strukturen 2d, wie beispielsweise Griffmulden, die den zu untersuchenden Wandbereich bei einer herkömmlichen gerichteten Beleuchtung von oben abschatten würden. Dem gegenüber ermöglicht das mit dem zu inspizierenden Wandbereich 2a in Kontakt stehende Streumittel 9 eine homogene Strahlungsdiffusion auch direkt hinter dem abzubildenden Wandbereich 2a. Dadurch wird ein diffuses Hellfeld bereitgestellt, das es insbesondere ermöglicht, wie auch im Bereich der zweiten Inspektionseinheit 1b angedeutet ist, die Strahlungsquellen 7a bis 7c außerhalb des Bildbereichs der Kameras 5a bis 5c anzuordnen. Anders gesagt, müssen die Strahlungsquellen 7a bis 7c aus Sicht der Kameras 5a bis 5c nicht selbst hinter dem abzubildenden Wandabschnitt 2a bis 2c angeordnet werden.

Dies ermöglicht beispielsweise die in der Figur 2 angedeutete Anordnung der Kameras 5b, 5c zu beiden Seiten des Transporteurs 3, um die einander gegenüberliegenden Seitenwandbereiche 2b, 2c der Behälter 2 an einer gemeinsamen Inspektionsposition abzubilden. Die Kameras 5b, 5c können die einander gegenüberliegenden Seitenwandbereiche 2b, 2c des Behälters 2 somit ohne Änderung der Drehlage des Behälters 2 und/oder im Wesentlichen gleichzeitig abbilden. In Kombination mit einem (nicht dargestellten) Spiegelkabinett im Bereich der Kameras 5b, 5c ist ferner eine vollumfängliche Abbildung der Behälter 2 im Bereich der zweiten Inspektionseinheit 1b möglich, ohne den Behälter 2 zwischen einzelnen Aufnahmen der Kameras 5b, 5c drehen zu müssen. Der Transporteur 3 umfasst beispielsweise geeignet angeordnete Riemen, Halter und dergleichen, so dass die Bestrahlungs- und Abbildungsstrahlengänge nicht behindert werden.

Die gleichen Vorteile lassen sich auch bei der Inspektion von Vorformlingen 12 für zu blasende Kunststoffflaschen erzielen, wie dies in der Fig. 3 schematisch angedeutet ist. Das Streumittel 9 könnte beispielsweise in gasförmiger Phase mittels eines Rinsers in die Vorformlinge 12 eingebracht werden.

Wie die Figur 3 ferner schematisch andeutet, ermöglicht das Streumittel 9 eine orthogonale Ausrichtung der Hauptstrahlrichtung 7' der Strahlungsquellen 7a bis 7c bezüglich der Blickrichtung 5' der Kameras 5a bis 5c. Eine derartige orthogonale Ausrichtung der Strahlungsquellen und Kameras ist beispielsweise für die Seitenwandinspektion der Behälter 2 besonders vorteilhaft. Es ist jedoch auch eine schräge Ausrichtung der Hauptstrahlrichtung 7' bezüglich der Blickrichtung 5' denkbar. Dies ist in der Figur 3 mit Hilfe der Winkel 15, 17 schematisch angedeutet, die die Blickrichtung 5' und die Hauptstrahlrichtung 7' jeweils mit der Hauptachse 2' der Behälter 2 ausbilden. Die Winkel 15, 17 unterscheiden sich vorzugsweise um 45 bis 135 Grad voneinander.

Nichtsdestoweniger könnten die Strahlungsquellen und Kameras bezüglich des Streumittels 9 auch einander gegenüberliegend angeordnet sein, bei der ersten Inspektionseinheit 1a beispielsweise über dem zu inspizierenden Behälter 2. In diesem Fall würden sich die Winkel 15, 17 definitionsgemäß um 180 Grad unterscheiden. Somit erlaubt das Streumittel 9 eine Vielzahl von Bestrahlungsvarianten durch unterschiedliche Wandbereiche der Behälter 2 oder der Vorformlinge 12 und/oder durch deren Mündung. Dadurch lassen sich die erfindungsgemäßen Inspektionseinheiten besonders kompakt ausführen. Ebenso können unterschiedlich geformte Behälter 2, beispielsweise mit komplexen Behälterformen, gleichmäßig im Hellfeld beleuchtet und abgebildet werden.

Die abgebildeten Inspektionseinheiten 1a, 1b sind lediglich beispielhaft. Mit Hilfe des Streumittels 9 lassen sich ebenso die folgenden Bereiche der Behälter 2 inspizieren: Dichtflächen, die innere Oberfläche der Seitenwand, Verschlussgewinde, sowie seitliche Bereiche der Behältermündung. Hierbei lassen sich vor dem von dem Streumittel 9 erzeugten Hellfeld Fremdkörper 4, wie beispielsweise Folienreste und Glassplitter, sowie Beschädigungen, wie beispielsweise Abplatzer, und dergleichen in bekannter Weise als Kontrastunterschiede erkennen.

Das Streumittel 9 könnte beispielsweise im Inneren der Behälter 2 verwirbelt werden, um eine homogene Verteilung des Streumittels 9 in den Behältern 2 oder Vorformlingen 12 zu erzeugen. Das Streumittel 9 könnte beispielsweise für einen nachfolgenden Behandlungsschritt in den Behältern 2 verbleiben. Geeignet wäre zum Beispiel Stickstoffnebel, der bei einem nachfolgenden Füllvorgang auf der eingefüllten Flüssigkeit (nicht dargestellt) liegen bleibt und eine hygienische Kaltabfüllung ermöglicht. Ebenso könnte das Streumittel 9 eine sterilisierende Wirkung haben. Dadurch ließe sich das Streumittel 9 für weitere Behandlungsschritte der Behälter 2 oder Vorformlinge 12 einsetzen. Das Streumittel 9 ist vorzugsweise ein Fluid, dass sich innerhalb von höchstens 100 Millisekunden, vorzugsweise innerhalb von höchstens 10 Millisekunden, in die Behälter 2 oder Vorformlinge 12 einbringen lässt, beispielsweise durch Einspritzen. Ebenso ließe sich das Streumittel 9 in gasförmiger Phase unter Druck einbringen.

Dadurch, dass das Streumittel 9 jeweils bis zur Innenwand der zu inspizierenden Wandbereiche 2a bis 2c heranreicht, lassen sich mittels Lichtstreuung auch Wandbereiche ausleuchten, die bei einer gerichteten Bestrahlung aufgrund der Lichtbrechung an den Behälteroberflächen nicht für die Beleuchtung zugänglich sind.

Es wäre auch denkbar, das Streumittel 9 für eine Wanddickenvermessung der Behälter 2 zu verwenden. In diesem Fall wäre es ausreichend, das Streumittel 9 mit einer geeigneten Strahlungswellenlänge zu bestrahlen und die Strahlungsintensität nach einem einmaligen Durchgang der Messstrahlung durch die Behälterwand zu erfassen.

Ebenso wäre eine erfindungsgemäße Bestrahlung des Streumittels 9 bei einer optischen Füllhöheninspektion der Behälter 2 denkbar. In diesem Fall wäre in den Kopfraum der Behälter 2 beispielsweise flüssiger Stickstoff einzuleiten und zu beleuchten. In diesem Fall ermöglichen der Stickstoffnebel und Schaum eine Abgrenzung zum eingefüllten Produkt.

Mit der erfindungsgemäßen Vorrichtung 1 lässt sich beispielsweise wie folgt arbeiten:
Im Inneren der Behälter 2 oder der Vorformlinge 12 wird das Streumittel 9 bereitgestellt, beispielsweise indem ein Druckentlastungsnebel nach dem Entformen der Behälter 2 in diesen verbleibt oder indem das Streumittel 9 unmittelbar vor der Inspektion, beispielsweise in gasförmiger Phase, in die Vorformlinge 12 eingebracht wird. Das Streumittel 9 wird vor der Inspektion jeweils derart in den Behältern 2 oder in den Vorformlingen 12 verteilt, dass das Streumittel 9 im Bereich der jeweils zu inspizierenden Wandbereiche 2a bis 2c mit diesen in Kontakt ist. Das Streumittel 9 wird dann derart bestrahlt, dass in den abzubildenden Wandbereichen 2a bis 2c eine virtuelle Strahlungsquelle erzeugt wird, die für die Abbildung der Wandbereiche 2a bis 2c als Hellfeld dient. Die zu inspizierenden Wandbereiche 2a bis 2c werden dann bei der vorstehend beschriebenen Hellfeldbeleuchtung im Durchlicht abgebildet. Die Auswertung der abgebildeten Wandbereiche kann mit Hilfe bekannter Bildauswerteverfahren erfolgen. Beispielsweise können örtliche Helligkeitsunterschiede im erzeugten Hellfeld durch eine geeignete Kalibrierung und/oder Mittelung einzelner Aufnahmen kompensiert werden.

Das Streumittel 9 kann in den zu inspizierenden Behältern 2 oder in den Vorformlingen 12 sowohl für die Inspektion unterschiedlicher Wandbereiche 2a bis 2c, zum Erkennen unterschiedlicher Beschädigungen und/oder Fremdkörper, als auch für einen nachfolgenden Behandlungsschritt verbleiben. Somit kann das Streumittel 9 in unterschiedlichen Inspektionseinheiten 1 a, 1 b als virtuelle Strahlungsquelle für die Hellfeldbeleuchtung zu inspizierender Wandbereiche 2a bis 2c verwendet werden.

Die Strahlungsquellen 7a bis 7c lassen sich im Vergleich zum Stand der Technik kompakter ausführen und mit größerer Gestaltungsfreiheit anordnen. Insbesondere ist es möglich, die Strahlungsquellen so anzuordnen, dass an einer einzelnen Inspektionsposition eine vollumfängliche Seitenwandinspektion ermöglicht wird. Im Gegensatz dazu sind beim Stand der Technik wenigstens zwei Inspektionspositionen mit getrennten Beleuchtungs- und Abbildungssystemen entlang eines Transporteurs notwendig. Während Druckentlastungsnebel in zu inspizierenden Behältern 2 bei herkömmlichen Inspektionsverfahren bisher einen Störfaktor darstellen, ermöglicht das erfindungsgemäße Verfahren eine vorteilhafte Nutzung von Druckentlastungsnebeln und erübrigt gegebenenfalls das Einbringen zusätzlicher Streumittel 9 in die zu inspizierenden Behälter 2 oder Vorformlinge.

Die beschriebenen Varianten der Erfindung können beliebig in technisch sinnvoller Weise kombiniert werden.

## Patentansprüche

1. Verfahren zur Inspektion von Behältern (2) und/oder Vorformlingen (12), mit den Schritten:
a) Bereitstellen eines Streumittels (9) im Inneren der Behälter oder Vorformlinge;
b) Bestrahlen des Streumittels derart, dass das Streumittel ein Hellfeld hinter einem abzubildenden Wandbereich (2a-2c) des Behälters oder Vorformlings ausbildet; und
c) Abbilden des Wandbereichs,
**dadurch gekennzeichnet, dass**
das Streumittel (9) im Schritt c) im Wesentlichen gasförmig vorliegt.

2. Verfahren nach Anspruch 1, wobei das Streumittel (9) im Schritt c) im Wesentlichen als Dampf, Nebel und/oder Rauch vorliegt.

3. Verfahren nach Anspruch 1 oder 2, wobei das Streumittel (9) schwerer ist als Luft.

4. Verfahren nach einem der vorigen Ansprüche, wobei das Streumittel (9) gekühlt in flüssiger Phase zugeführt wird, insbesondere in Form von flüssigem Stickstoff.

5. Verfahren nach wenigstens einem der vorigen Ansprüche, wobei das Streumittel (9) einen Druckentlastungsnebel umfasst, insbesondere einen Nebel in Folge einer Druckentlastung bei der Herstellung des Behälters (2).

6. Verfahren nach wenigstens einem der vorigen Ansprüche, wobei das Streumittel (9) im Schritt c) mit dem Wandbereich (2a-2c) in Kontakt ist.

7. Verfahren nach wenigstens einem der vorigen Ansprüche, wobei das Streumittel (9) eine sterilisierende Wirkung hat.

8. Verfahren nach wenigstens einem der vorigen Ansprüche, wobei der abzubildende Wandbereich (2a) der Boden des Behälters (2) oder Vorformlings (12) ist und das Streumittel (9) durch die Seitenwand und/oder die Mündung des Behälters oder Vorformlings bestrahlt wird.

9. Verfahren nach wenigstens einem der vorigen Ansprüche, wobei der abzubildende Wandbereich (2b, 2c) die Seitenwand des Behälters (2) oder Vorformlings (12) ist und das Streumittel (9) von oben und/oder unten, insbesondere durch die Mündung und/oder den Boden des Behälters oder Vorformlings, bestrahlt wird.

10. Verfahren nach wenigstens einem der vorigen Ansprüche, wobei die räumliche Verteilung des Streumittels (9) im Bereich des abzubildenden Wandabschnitts (2a-2c) im Wesentlichen symmetrisch zur Hauptachse (2') des Behälters (2) ist.

11. Verfahren nach wenigstens einem der vorigen Ansprüche, wobei die Behälter (2) oder Vorformlinge (12) in den Schritten a) bis c) entlang einer Förderstrecke (3) bewegt werden.

12. Verfahren nach Anspruch 11, wobei das Streumittel (9) nacheinander aus wenigstens zwei unterschiedlichen Hauptstrahlrichtungen (7') bestrahlt wird, um entlang der Förderstrecke wenigstens zwei Hellfelder für die Inspektion unterschiedlicher Wandbereiche (2a-2c) bereit zu stellen.

13. Vorrichtung zur Inspektion von Behältern (2) oder Vorformlingen (12), mit:
- wenigstens einer Kamera (5a-5c) zum Abbilden eines zu inspizierenden Wandbereichs (2a-2c) der Behälter oder Vorformlinge;
- einer Einrichtung (10) zum Bereitstellen und/oder Verteilen eines Streumittels (9) im Inneren der Behälter oder Vorformlinge; und
- wenigstens einer Strahlungsquelle (7a-7c) zum Bestrahlen des Streumittels derart, dass das bestrahlte Streumittel ein Hellfeld beim Abbilden des Wandbereichs ausbildet,
**dadurch gekennzeichnet, dass**
die Vorrichtung derart ausgebildet ist, dass das Streumittel (9) beim Abbilden im Wesentlichen gasförmig vorliegt.

14. Vorrichtung nach Anspruch 13, wobei sich die Hauptstrahlrichtung (7') der Strahlungsquelle (7a-7c) und die Blickrichtung (5') der Kamera (5a-5c) bezüglich der Hauptachse (2', 12') des Behälters (2) oder Vorformlings (12) um 45° bis 135° voneinander unterscheiden.

15. Vorrichtung nach wenigstens Anspruch 13 oder 14, wobei im Bereich der Strahlungsquelle wenigstens zwei Kameras (5b, 5c) einander gegenüber liegend zu beiden Seiten einer Transportstrecke (3) für die Behälter (2) oder Vorformlinge (12) vorgesehen sind, so dass die Kameras die bestrahlten Behälter oder Vorformlinge an einer gemeinsamen Inspektionsposition bezüglich der Transportstrecke und/oder gleichzeitig abbilden können.

## Claims

1. A method for inspecting containers (2) and/or preforms (12), including the steps:
a) providing a scattering medium (9) in the interior of the containers or preforms;
b) irradiating the scattering medium in such a way that the scattering medium forms a bright field behind a wall area (2a-2c) of the container or preform to be imaged; and
c) imaging the wall area,
**characterized in that**
the scattering medium (9) in step c) is present essentially in gaseous form.

2. The method according to claim 1, wherein the scattering medium (9) in step c) is present as steam, mist and/or smoke.

3. The method according claim 1 or 2, wherein the scattering medium (9) is heavier than air.

4. The method according to at least one of the preceding claims, wherein the scattering medium (9) is supplied cooled in liquid phase, in particular in the form of liquid nitrogen.

5. The method according to at least one of the preceding claims, wherein the scattering medium (9) comprises a pressure-release mist, in particular a mist resulting from a pressure-release during the manufacture of the container (2).

6. The method according to at least one of the preceding claims, wherein the scattering medium (9) in step c) is in contact with the wall area (2a-2c).

7. The method according to at least one of the preceding claims, wherein the scattering medium (9) has a sterilizing effect.

8. The method according to at least one of the preceding claims, wherein the wall area (2a) to be imaged is the bottom of the container (2) or preform (12) and the scattering medium (9) is irradiated through the side wall and/or the mouth of the container or preform.

9. The method according to at least one of the preceding claims, wherein the wall area (2b, 2c) to be imaged is the side wall of the container (2) or preform (12) and the scattering medium (9) is irradiated from above and/or from below, in particular through the mouth and/or the bottom of the container or preform.

10. The method according to at least one of the preceding claims, wherein the spatial distribution of the scattering medium (9) in the area of the wall section (2a-2c) to be imaged is essentially symmetrical relative to the main axis (2') of the container (2).

11. The method according to at least one of the preceding claims, wherein the containers (2) or preforms (12) in the steps a) to c) are moved along a conveyor line (3).

12. The method according to claim 11, wherein the scattering medium (9) is irradiated successively from at least two different main radiation directions (7'), in order to provide at least two bright fields along the conveyor line for the inspection of different wall areas (2a-2c).

13. A device for inspecting containers (2) or preforms (12), having:
- at least one camera (5a-5c) for imaging a wall area (2a-2c) of the container or preform to be inspected;
- a means (10) for providing and/or distributing a scattering medium (9) in the interior of the containers or preforms; and
- at least one radiation source (7a-7c) for irradiating the scattering medium in such a way that the irradiated scattering medium forms a bright field during imaging of the wall area,
**characterized in that**
the device is configured such that the scattering medium (9) is present during the imaging essentially in gaseous form.

14. The device according to claim 13, wherein the main radiation direction (7') of the radiation source (7a-7c) and the viewing direction (5') of the camera (5a-5c) differ from one another by 45° to 135° relative to the main axis (2', 12') of the container (2) or preform (12).

15. The device according to at least claim 13 or 14, wherein two cameras (5b, 5c) are provided opposite one another on both sides of a transport line (3) for the containers (2) or preforms (12) in the area of the radiation source, in such a way that the cameras are, at a common inspection position relative to the transport line and/or simultaneously, able to image the irradiated containers or preforms.

## Revendications

1. Procédé pour l'inspection de récipients ou contenants (2) et/ou de préformes (12), comprenant les étapes de :
a) la fourniture d'un agent de dispersion (9) à l'intérieur des contenants ou préformes ;
b) l'irradiation de l'agent de dispersion de manière telle, que l'agent de dispersion forme un fond clair derrière une zone de paroi (2a-2c) à reproduire en image, du contenant ou de la préforme ; et
c) la reproduction sous forme d'image de ladite zone de paroi,
**caractérisé en ce que**
l'agent de dispersion (9) se présente essentiellement sous forme gazeuse dans l'étape c).

2. Procédé selon la revendication 1, d'après lequel l'agent de dispersion (9) se présente essentiellement sous forme de vapeur, de brouillard et/ou de fumée, dans l'étape c).

3. Procédé selon la revendication 1 ou la revendication 2, d'après lequel l'agent de dispersion (9) est plus lourd que l'air.

4. Procédé selon l'une des revendications précédentes, d'après lequel l'agent de dispersion (9) est amené sous forme refroidie, en phase liquide, notamment sous la forme d'azote liquide.

5. Procédé selon l'une au moins des revendications précédentes, d'après lequel l'agent de dispersion (9) comprend un brouillard de décharge de pression, notamment un brouillard suite à une décharge de pression lors de la fabrication du contenant (2).

6. Procédé selon l'une au moins des revendications précédentes, d'après lequel dans l'étape c), l'agent de dispersion (9) est en contact avec la zone de paroi (2a-2c).

7. Procédé selon l'une au moins des revendications précédentes, d'après lequel l'agent de dispersion (9) a une action de stérilisation.

8. Procédé selon l'une au moins des revendications précédentes, d'après lequel la zone de paroi (2a) à reproduire en image est le fond du contenant (2) ou de la préforme (12), et l'agent de dispersion (9) est irradié à travers la paroi latérale et/ou l'embouchure du contenant ou de la préforme.

9. Procédé selon l'une au moins des revendications précédentes, d'après lequel la zone de paroi (2b, 2c) à reproduire en image est la paroi latérale du contenant (2) ou de la préforme (12), et l'agent de dispersion (9) est irradié par le haut et/ou le bas, notamment à travers l'embouchure et/ou le fond du contenant ou de la préforme.

10. Procédé selon l'une au moins des revendications précédentes, d'après lequel la répartition spatiale de l'agent de dispersion (9) dans la région de la zone de paroi (2a-2c) à reproduire en image, est sensiblement symétrique par rapport à l'axe principal (2') du contenant (2).

11. Procédé selon l'une au moins des revendications précédentes, d'après lequel les contenants (2) ou les préformes (12) sont déplacés le long d'un parcours de transport (3) dans les étapes a) à c).

12. Procédé selon la revendication 11, d'après lequel l'agent de dispersion (9) est irradié successivement à partir d'au moins deux directions d'irradiation principales (7') différentes, pour fournir, le long du parcours de transport, au moins deux fonds clairs destinés à l'inspection de zones de paroi (2a-2c) différentes.

13. Dispositif pour l'inspection de récipients ou contenants (2) ou de préformes (12), comprenant :
- au mois une caméra (5a-5c) pour reproduire en image une zone de paroi (2a-2c) à inspecter, des contenants ou préformes ;
- un dispositif (10) pour fournir et/ou répartir un agent de dispersion (9) à l'intérieur des contenants ou préformes ; et
- au moins une source de rayonnement ou d'irradiation (7a-7c) pour irradier l'agent de dispersion de façon telle, que l'agent de dispersion irradié forme un fond clair lors de la reproduction en image de la zone de paroi,
**caractérisé en ce que**
le dispositif est conçu de façon à ce que l'agent de dispersion (9) se présente essentiellement sous forme gazeuse lors de la reproduction en image.

14. Dispositif selon la revendication 13, dans lequel la direction d'irradiation principale (7') de la source de rayonnement ou d'irradiation (7a-7c) et la direction d'observation (5') de la caméra (5a-5c) par rapport à l'axe principal (2', 12') du contenant (2) ou de la préforme (12) se différencient l'une de l'autre de 45° à 135°.

15. Dispositif selon au moins la revendication 13 ou la revendication 14, dans lequel au niveau de la zone de la source de rayonnement ou d'irradiation, sont prévues au moins deux caméras (5b, 5c) mutuellement opposées, de part et d'autre d'un parcours de transport (3) pour les contenants (2) ou les préformes (12), de sorte que les caméras peuvent reproduire en image les contenants ou préformes irradiés, au niveau d'une position d'inspection commune par rapport au parcours de transport et/ou simultanément.
